# EUROPEAN PATENT SPECIFICATION

(11) **EP 3 789 218 B1**
(45) Date of publication and mention of the grant of the patent: **30.10.2024**
(21) Application number: 20194418.8
(22) Date of filing: 03.09.2020
(51) Int. Cl.: B60G 9/00, B60K 7/00

(54) **DRIVING AXLE FOR A HYBRID HEAVY VEHICLE**
ANTRIEBSACHSE FÜR EIN SCHWERLASTHYBRIDFAHRZEUG
ESSIEU D'ENTRAÎNEMENT POUR UN VÉHICULE LOURD HYBRIDE

(30) Priority: 03.09.2019 IT 201900015431
(43) Date of publication of application: 10.03.2021
(73) Proprietor: Iveco S.p.A., 10156 Torino (IT)
(72) Inventor: PEREIRA DE LEMOS, José Francivaldo, SETE LAGOAS MG (BR)
(74) Representative: Studio Torta S.p.A.

(56) References cited:
- EP-A1- 0 812 720
- EP-A1- 1 380 459
- EP-A1- 2 551 181
- EP-A2- 1 362 731
- EP-A2- 1 894 762
- WO-A1-2013/173915
- WO-A1-2015/087659
- WO-A1-2019/014479
- CN-A- 106 740 060
- DE-A1- 102010 017 966
- DE-A1- 102010 023 982
- DE-A1- 102010 023 985
- DE-A1- 102015 213 357
- DE-A1- 102016 004 367
- DE-A1- 102016 223 631
- KR-A- 20130 115 956
- US-A- 5 343 974
- US-A1- 2003 230 443
- US-A1- 2008 179 116

## Description

### CROSS-REFERENCE TO RELATED APPLICATIONS

This patent application claims priority from Italian patent application no. 102019000015431 filed on 03/09/2019.

### TECHNICAL FIELD

This invention relates to a driving axle for a hybrid heavy vehicle.

### KNOWN PRIOR ART

As is well known, heavy vehicles such as trucks, lorries, buses and similar vehicles are equipped with a front driver's cab and one or more rear compartments for transporting goods or passengers, depending on their use.

Normally, the rear compartments are supported by a lower portion of the body shell, also called the floor of the vehicle.

In turn, the floor is supported by a set of suspensions with a plurality of axles, which each carry two or more aligned wheels and have the function of transmitting the load of the compartments and of the bottom to the wheels.

In some cases, at least one of the axles is a driving axle, i.e. it contributes to the traction of the vehicle and is therefore equipped with an automotive differential.

This differential typically has one input connected to a power take-off of the vehicle and two outputs connected to the wheels via two respective semi-axles forming part of the axle.

Each of the driving axles extends between the wheels below the floor of the vehicle, so that it is possible to follow the movements of the suspensions without interfering with the floor itself.

Thus, the dimensions of the driving axles means that the floor of the vehicle has to be lifted off the ground.

In contrast, it is generally known that lowering the ground clearance of the vehicle floor results in better suspension performance.

In addition, a reduced ground clearance enables a reduction in the overall dimensions of the vehicle and, therefore, the possibility of increasing the transport capacity of the vehicle itself, for example by increasing the capacity of the compartments.

There is a need, therefore, to lower the ground clearance of the vehicle floor, without causing interference of any kind between the semi-axles and the floor itself.

More generally, there is also a need to reduce the overall dimensions of known axles and to simplify the vehicle architecture while maintaining robustness and reliability. Meeting these requirements is of particular importance in hybrid vehicles, as the latter have a significantly more complex architecture than purely thermal-powered vehicles.

For example, US20080179116A1 discloses a complex and cumbersome drive device with plural suspension links.

US5343974A and EP1380459A1 disclose different examples of drive devices.

EP0812720A1 discloses another cumbersome drive device including a drive axle with a pair of wheels being each driven by an associated electric motor.

A similar drive device is disclosed also in W2013173915A1.

The preamble of claim 1 is disclosed by DE102010017966A1, which concerns different axle arrangements for a hybrid vehicle.

WO2019014479A1 discloses an axle assembly where an electric machine is positioned within an axle housing of the axle assembly.

The purpose of the invention is to satisfy at least one of the above needs in a simple and economical way.

### SUMMARY OF THE INVENTION

The above-mentioned purpose is achieved with a driving axle for a hybrid heavy vehicle, as claimed in the attached claims.

### BRIEF DESCRIPTION OF THE DRAWINGS

In order to better understand this invention, nonlimiting embodiments thereof will now be described by way of example with reference to the accompanying drawings, in which:
- Figure 1 is a perspective view, with parts removed for clarity, of a hybrid heavy vehicle that comprises a driving axle according to one embodiment of the invention;
- Figure 2 is an additional perspective view illustrating, from below, a detail of the heavy vehicle in Figure 1 on an enlarged scale;
- Figure 3 is a side view of the driving axle, with parts in cross-section; and
- Figure 4 is similar to Figure 3 and illustrates a variant of the driving axle.

### DETAILED DESCRIPTION OF THE INVENTION

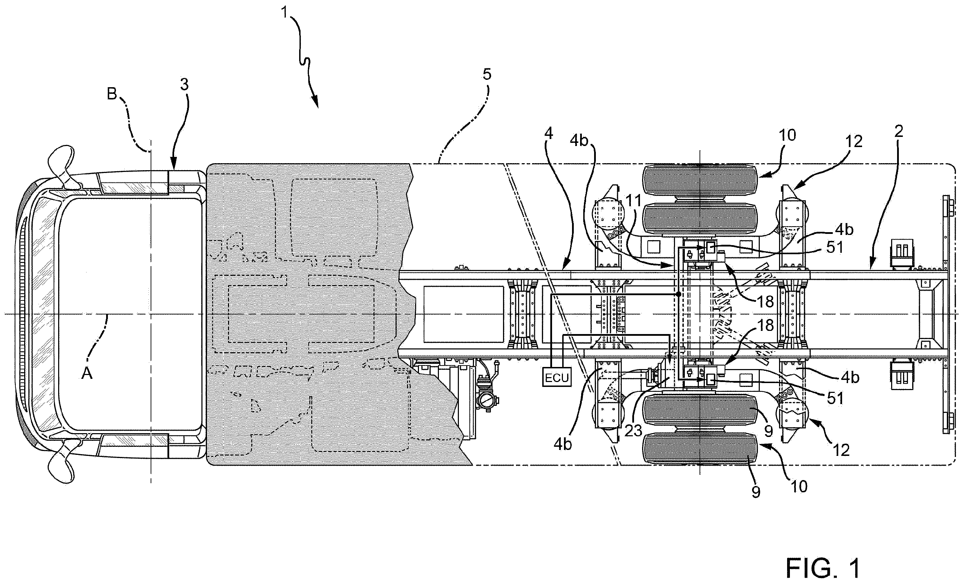

In Figure 1, the reference number 1 indicates a hybrid heavy vehicle, in particular a freight truck.

The vehicle 1 comprises a frame 2 that has, according to the forward direction of the vehicle 1 in use, a front portion 3 defining a driver's cab and a rear portion 4.

The rear portion 4 extends along a straight axis A, which is direct along the forward direction of the vehicle 1. The rear portion 4 supports, in addition, from below a cargo compartment 5 of the vehicle 1 for containing freight.

The cargo compartment 5 has a horizontal floor that extends along the axis A above the rear portion 4 and is coupled to the latter, especially directly.

In addition, the vehicle 1 comprises a front axle (not illustrated) of a known type and not described in detail, which is arranged beneath the front portion 3 and is coupled to the latter by means of a suspension of a known type (not illustrated).

The vehicle 1 also comprises two pairs of front wheels (not illustrated) that are coaxial to each other and, respectively, arranged on opposite sides of the front portion 3 in relation to the axis A.

The pairs of front wheels are aligned with each other along one axis B, which is orthogonal to another axis A, and fixed to the front axle. Together with the front axle, the pairs of front wheels support the front portion 3.

The vehicle 1 also comprises two pairs of rear wheels 10 and a driving axle 11 that couples the two pairs of wheels 10 to the rear portion 4.

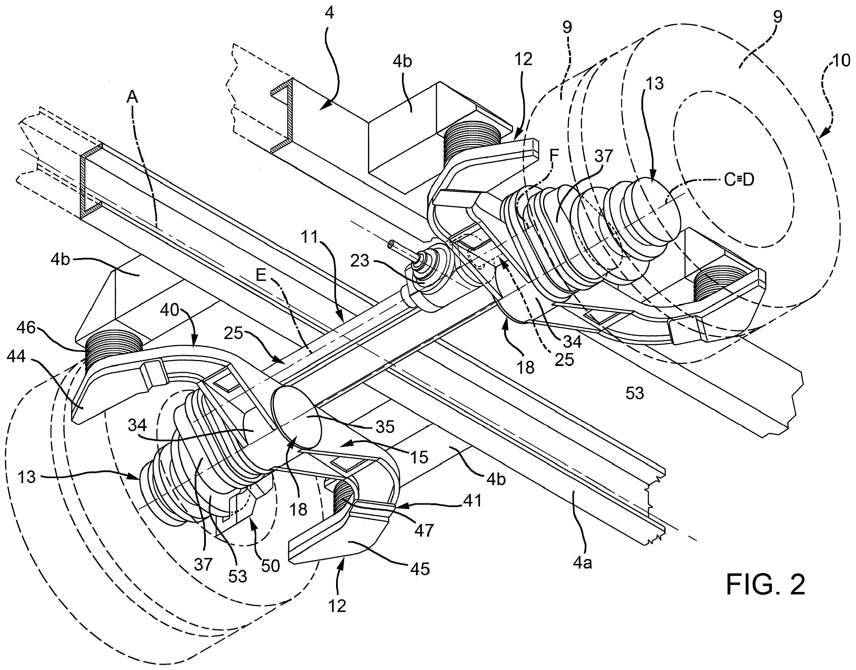

More specifically, as can be seen in Figure 2, the rear portion 4 comprises a central structure 4a along the axis A and a plurality of structural appendages 4b that extend transversely to the axis A, i.e. to the opposite sides of the central structure 4a.

In other words, the structural appendages 4b protrude laterally in relation to the central structure 4a, i.e. according to a direction transverse, more precisely orthogonal, to the axis A.

In particular, the structural appendages 4b comprise a plurality of plates connected to each other. The central structure 4a supports the cargo compartment 5 and the floor thereof.

The driving axle 11 is coupled to the frame 2, in particular to the rear portion 4, and, more in particular, to the structural appendages 4b, specifically directly; as can be seen in Figures 1 and 2, the driving axle 11 extends at least in part below the central structure 4a.

In other words, the driving axle 11 includes at least one portion arranged at least at the same height level as the central structure 4a or at a higher height level.

Thus, the pairs of wheels 10 and the driving axle 11 support the rear portion 4 and the cargo compartment 5.

The pairs of wheels 10 comprise respective wheel-hubs 13 (Figure 2) that are coupled, respectively, to ends of the axle 11 and each of which carries, coaxially, two tyres 9.

The wheel-hubs 13 are of a known type and, therefore, are not described in further detail. Possibly, each wheel-hub 13 can introduce a fixed or variable transmission ratio between the driving axle 11 and the corresponding tyres 9. An example of a wheel-hub that introduces a variable transmission ratio is described, in particular, in WO2016110823A1.

In Figure 1, the pairs of wheels 10 are aligned with each other along an axis C parallel to the axis B.

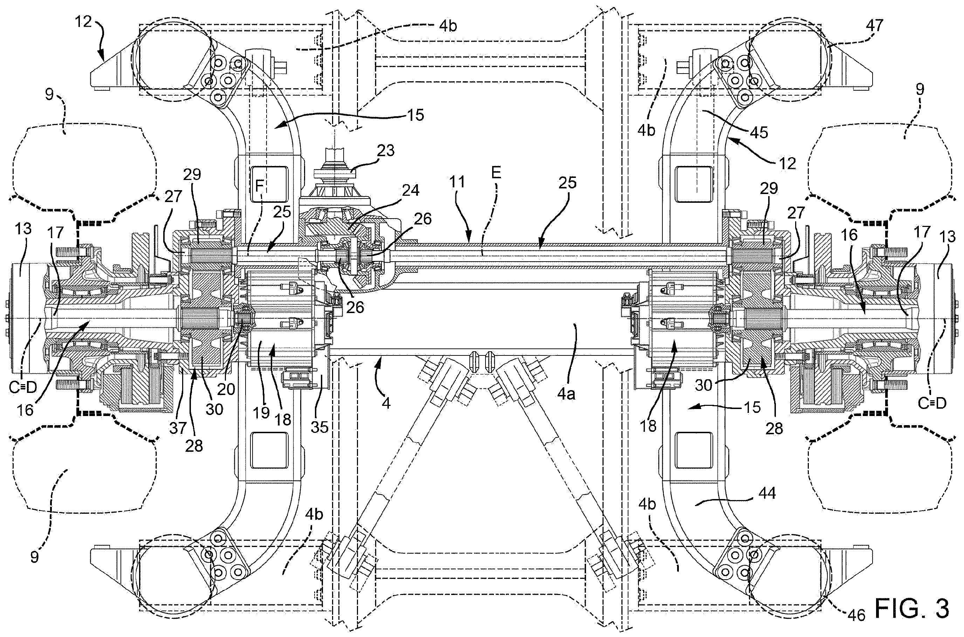

As shown in Figure 3, the driving axle 11 comprises:
- a power take-off 23 carried by the frame 2, in particular by the rear portion 4, and which can be selectively connected to an internal combustion engine (not illustrated) of the vehicle 1, for example by means of a friction clutch of a type known and not described in detail;
- an automotive differential 24, for example of a known type, that has an input coupled to the power take-off 23, in particular permanently, to receive from the power take-off 23 the power supplied by the internal combustion engine, and two outlets;
- two axle shafts 25 that have first ends or portions 26 respectively coupled to the two outlets of the differential 24 and second ends or portions 27 respectively coupled to the wheel-hubs 13, so that each axle shaft 25 receives at least part of the power distributed by the internal combustion engine and supplies it to the corresponding wheel-hub 13; and

- two driving assemblies 12 carried by the frame 2, in particular by the rear portion 4 and, more particularly, by the structural appendages 4b, as well as configured each one to supply electrical power to the corresponding wheel-hub 13.

The ends 26, the power take-off 23, and the differential 24 are arranged below the central structure 4a.

On the other hand, the driving groups 12 and the ends 27 are arranged spaced apart from the central structure 4a in a direction that is transverse to the axis A.

In other words, the driving assemblies 12 and the ends 27 are arranged laterally in relation to the central structure 4a, i.e. the central structure 4a extends between the driving assemblies 12.

The driving assemblies 12 are fixed with respect to the power take-off 23 and to the differential 24.

Each driving assembly 12 comprises:
- a corresponding suspension arm 15 carried by the frame 2;
- a corresponding shaft 16 (Figure 3), which is carried by the suspension arm 15, so that it turns about the axis C, and is equipped with an end 17 that is connected to the corresponding wheel-hub 13; and
- an electric motor 18, which has a stator 19 carried in a fixed position by the suspension arm 15 and a rotor 20 that is coupled to the shaft 16 to drive the latter in rotation around the axis C.

For the sake of clarity, as can also be understood directly and unequivocally from Figure 3, the expression "carried in a fixed position" means "stiffly coupled", i.e. that the whole pose, that is the position and orientation, of the stator 19 is fixed with respect to the suspension arm 15. In other words, it means that the stator 19 moves entirely in a way stiffly integral with the suspension arm 15. This means that the expression "carried in a fixed position" excludes relative translations and rotations between the stator 19 and the suspension arm 15.

Each driving assembly 12 is coupled to a corresponding axle shaft 25; more in detail, the end 27 of the corresponding axle shaft 25 is coupled to the corresponding shaft 16 so that the rotation of the axle shaft 25 is conveyed to the shaft 16.

In other words, the axle 11 comprises, in addition, two transmissions 28, in particular two equal to each other, that connect each of the ends 27 to each corresponding shaft 16. Specifically, each transmission 28 introduces a fixed transmission ratio between the corresponding end 27 and the corresponding shaft 16. In particular, each transmission 28 comprises a pair of gears 29, 30 engaging each other and respectively fitted to the corresponding end 27 and to the corresponding shaft 16.

According to the embodiment illustrated in Figure 3, the axle shafts 25 extend on opposite sides of the differential 24 and along corresponding axis E, F, which are parallel to the axis C and lie on the same plane of the axis C, in particular vertically, above the latter. The two axle shafts 25 have different lengths and the differential 24 along with the power take-off 23 are near to one of the driving assemblies 12.

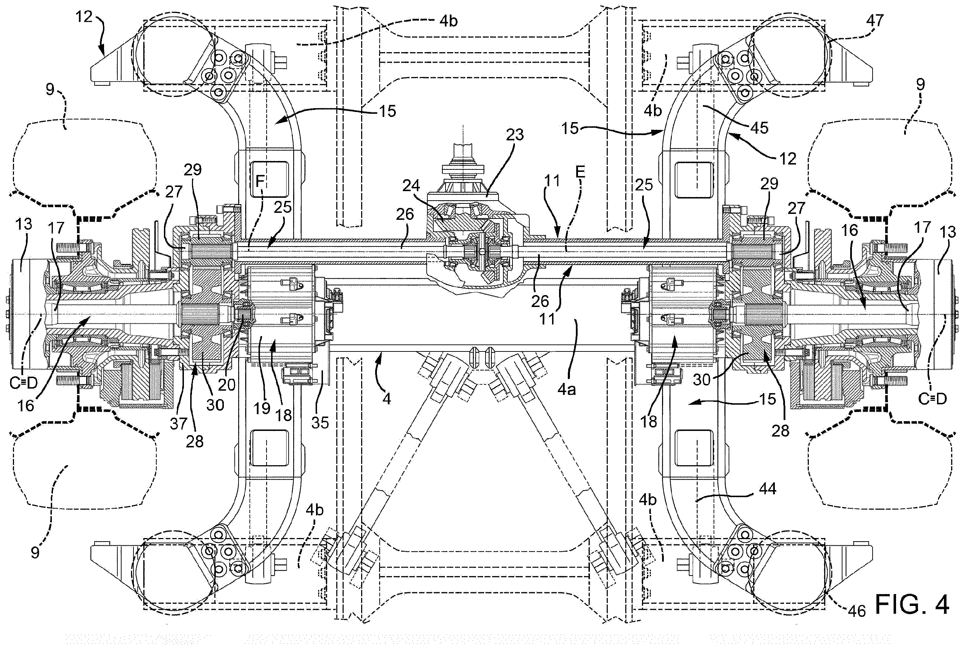

In the variant in Figure 4, on the other hand, the axle shafts 25 have the same length, and the differential 24 and the power take-off 23 are arranged centrally between the driving assemblies 12.

As shown in Figure 2, the driving assemblies 12 are preferably identical to each other. Therefore, only one of the driving assemblies 12 will be described in greater detail below.

With greater detail, the stator 19 and the rotor 20 are coaxial to each other around an axis D, preferably parallel to the axis C and, specifically, aligned with the latter. Clearly, the axis D is completely fixed with respect to the suspension arm 15.

More precisely, the rotor 20 is directly coupled to the shaft 16, for example by means of a keyed connection. Alternatively, the driving assembly 12 could comprise any transmission to couple the shaft 16 to the rotor 20 and to transmit the rotation motion of the latter to the shaft 16.

According to the invention, the suspension arm 15 comprises a hollow portion 34 (Figure 2) that at least partially houses the motor 18. Specifically, the hollow portion 34 completely houses the rotor 20 and, conveniently, the stator 19 too. In particular, the motor 18 comprises a connection portion 35, particularly of the flange type, which is fixed in relation to the stator 19, for example since it is made of a single piece with the stator 19, protrudes along the axis D with respect to the hollow portion 34, and is stiffly fixed to the latter, for example by means of threaded elements (not illustrated).

As shown in Figure 2, the hollow portion 34 is cylindrical in shape and is arranged around the axis D.

In addition, the suspension arm 15 comprises an additional hollow portion 37 arranged between the wheel-hub 13 and the hollow portion 34, fixed with respect to the hollow portion 34 and housing the corresponding transmission 28. In particular, the hollow portion 37 houses, at least partially, the corresponding end 27.

The hollow portions 34, 37 respectively define internal volumes that communicate with each other and, preferably, are made of a single piece, so as to define a single hollow portion.

As shown in Figure 2, the hollow portion 37 has an oval shape and is, ideally, traversed by axes C, D, E, F.

In addition, the suspension arm 15 comprises two arm portions 40, 41 that extend from the hollow portion 34 in a transverse manner to the axis D, in particular according to corresponding directions aligned and opposite to each other, so that the one hollow portion 34 and, where present, the other hollow portion 37 define an intermediate portion of the suspension arm 15.

More specifically, the extension directions of the arm portions 40, 41 lie, ideally, on a plane that is perpendicular to that on which the axes C, D ideally lie. In practice, the extension directions of the arm portions 40, 41 are aligned with each other and, substantially, horizontal.

The arm portions 40, 41 have respective ends 44, 45 opposite with respect to the hollow portion 34 and, respectively, coupled to the rear portion 4, specifically to two of the structural appendages 4b.

In particular, the driving assembly 12 comprises at least one elastically deformable element 46, for example an air spring, as in Figure 2, that couples the end 44 to the rear portion 4 in an elastically yielding manner. More specifically, the elastically deformable element 46 is fixed to the end 44 and to a corresponding appendage 4b.

In addition, the driving assembly 12 comprises another elastically deformable element 47, for example one that is the same as the elastically deformable element 46, which couples the end 45 to the rear portion 4 in an elastically yielding manner. More specifically, the elastically deformable element 47 is fixed to the end 45 and to the other of the two appendages 4b (Figure 2).

Alternatively, one of the ends 45, 46 could extend along a hinge axis and be hinged, potentially virtually like a torsion bar, to the corresponding appendage 4b.

Conveniently, the suspension arm 15 could be made of a single piece and/or comprise metal, for example steel or aluminium.

As schematically illustrated in Figure 2, the driving assembly 12 preferably comprises, in addition, a brake caliper device 50, for example of a known type, and an attachment member 51 (Figure 1) for attaching a damper device (not illustrated), for example of a known type. The brake caliper device 50 and the attachment member 51 are carried in a fixed position by the hollow portion 37.

The brake caliper device 50 is configured to operatively cooperate with a brake disc 53, which is part of the corresponding wheel-hub 13.

Conveniently, the driving assembly 12 also comprises the above-mentioned damper device attached to the attachment member 51 and coupled to the rear portion 4 in order to dampen, in use, the vibrations owing to the contact between the pairs of wheels 10 and the road.

The driving assembly comprises, in addition, a base, carried by the hollow portion 37 and to which the brake caliper device 50 and the attachment member 51 are both coupled in a fixed position.

In addition, the vehicle 1 comprises a control unit ECU (Figure 1) electrically coupled to each motor 18 of each driving assembly 12 and configured to independently control the rotations of the corresponding rotors 20 and, consequently, the rotations of the wheel-hubs 13.

The control unit ECU is also electrically coupled to the power take-off 23 and is configured to activate and deactivate the connection between the power take-off 23 and the internal combustion engine.

When the power take-off 23 is connected to the internal combustion engine, the control unit ECU drives the motors 18 so that the angular velocity transmitted by each of the motors 18 to the corresponding shaft 16 is the same angular velocity that is transmitted to the same shaft 16 by the corresponding axle shaft 25 to which it is coupled. In this way, the torque transmitted to the shaft 16 by the motor 18 and by the axle shaft 25 are combined and the vehicle 1 moves regularly.

The operation of the embodiment of the vehicle 1 described above is the following.

When the vehicle 1 moves forward, each pair of wheels 10 is rotated by means of the corresponding driving assembly 12 that supplies the rotation of the wheel-hub 13. The motor 18 exerts a torque that is directly transmitted to the shaft 16, while the internal combustion engine can contribute to the vehicle 1 traction when the control unit ECU connects the power take-off 23 to the same internal combustion engine.

Here, the torque distributed by the internal combustion engine is transmitted to the corresponding axle shaft 25 by means of the differential 24 and, thus, to the shaft 16 through the transmission 28.

In particular, the torque distributed by the thermal engine is transmitted to the shaft 16 according to a fixed and constant transmission ratio, imposed by the engagement of the gears 29, 30.

When the vehicle 1 rounds a curve, the control unit ECU commands each motor 18, so that each distributes a different torque. More specifically, the torque supplied are such that the angular velocities are different for each shaft 16 and suitable for keeping the pairs of wheels 10 optimally adhering to the road.

If the power take-off 23 is connected to the internal combustion engine, each motor 18 is controlled by the control unit ECU so that the angular velocity transmitted to each shaft 16 by the corresponding motor 18 is equal to the angular velocity transmitted to the same shaft 16 by the corresponding axle shaft 25.

In addition, when the vehicle 1 moves forward, each pair of wheels 10 follows the conformation of the road and the corresponding suspension arm 15 moves as a result; in particular, the ends 44, 45 move by respectively deforming the elastically deformable elements 46, 47. At the same time, the damper device attached to the attachment member 51 dissipates the kinetic energy transferred by the pair of wheels 10 to the driving assembly 12.

The advantages of an axle 11 according to the invention are apparent from the above description.

Unlike known axles, the axle 11 comprises two more driving assemblies 12 that are independent and that are able, in themselves, to rotate the corresponding wheel-hubs 13 with a minimal number of components.

The same components also enable the transmission of the operating loads of the vehicle 1 between the frame 2 and the corresponding pairs of wheels 10.

The driving assemblies 12, adapted to make the vehicle 1 hybrid, have a minimal overall size, so that it is possible to reduce the ground clearance of the vehicle floor 1.

In fact, each driving assembly 12 is laterally spaced apart from the central structure 4a that supports the floor of the cargo compartment 5. In this way, the floor itself, like the whole rear portion 4, can have a minimum ground clearance.

This entails a corresponding increase in the load capacity of the vehicle 1 and in the overall performance of its suspensions, without interference between the driving assemblies 12 and the frame 2.

The suspension arm 15 has particularly advantageous construction features, from the point of view of compactness, simplicity of construction, and strength. The motor 18 is optimally supported by the corresponding suspension arm 15, which houses at least one rotor 20 thereof. The suspension arm 15 also houses the corresponding transmission 28.

In addition, the suspension arm 15 can effectively carry components such as the brake caliper device 50 or the attachment member 51, thus facilitating a better organisation of the overall dimensions of the vehicle 1.

Thanks to the control unit ECU, it is possible to independently control the motors 18.

Finally, it is clear that the axle 11 according to this invention can be modified and variations can be made without departing from the scope of protection, as set forth in the claims.

In particular, the pairs of wheels 10 and/or the other pairs of wheels 7 could be, respectively, replaced with single wheels, each having its own wheel-hub.

The geometry of the transmission arm 15 could be different to that described and illustrated. For example, just one of the two arm portions 40, 41 could be provided, or there could be additional arm portions as well as the arm portions 40, 41.

In addition, the elastically deformable element 46 could be arranged in a different position in relation to the suspension arm 15. Similarly, the brake caliper device 50 and the attachment member 51 could be carried by different portions of the suspension arm 15, for example by the hollow portion 34.

In addition, the driving assemblies 12 could be applied to the front traction of the vehicle 1, i.e. to support the front portion 3.

Between the shaft 16 and the rotor 20, there could be a transmission, in particular to multiply the torque distributed by the motor 18 in the transmission of the same torque to the shaft 16.

The axes C, D may not be aligned with each other. Each transmission 28 could introduce variable transmission ratios and/or enable the temporary decoupling between the corresponding axle shaft 25 and the corresponding shaft 16.

The differential input 24 could be detachable from the corresponding outlets, so that it is possible to prevent the transfer of power from the internal combustion engine to the wheel-hubs 13. In this case, the power take-off 23 could also be permanently connected to the internal combustion engine.

The function of the differential 24 could also be carried out by components that are part of the power take-off 23, so that the differential 24 could be absent. In general, the power take-off 23 and the differential 24 could be replaced by generic power distribution means configured to selectively distribute the power distributed by the internal combustion engine to the axle shafts 25.

## Claims

1. A driving axle (11) for a hybrid heavy vehicle (1), the axle comprising:
- a power take-off (23) configured to receive power from an internal combustion engine of said heavy vehicle (1);
- power distribution means (24) comprising two power outlets and configured to distribute the power received from said power take-off (23) to said power outlets;
- two axle shafts (25) having respective first portions (26) coupled to said power outlets to receive power from said power distribution means (24) and respective second portions (27) arranged to be coupled to respective wheel-hubs (13) of said heavy vehicle (1) and supply power to said wheel-hubs (13);
**characterized in that** the axle further comprises:
- two suspension arms (15) for being coupled to a frame (2) of said heavy vehicle (1);
- two shafts (16) carried by said suspension arm (15, 15') in a rotatable manner around an axis (C) and having relative axial ends (17) to be respectively connected to said wheel-hubs (13); and
- two electric motors (18) each having a stator portion (19), which is carried by one of said suspension arms (15) in a fixed position with respect to the same one of said suspension arms (15), and a rotor portion (20), which is coupled to one of said shafts (16) to drive the same one of said shafts (16) in rotation around said axis (C);
wherein said second portions (27) are respectively coupled to said shafts (16) to drive said shafts (16) in rotation around said axis (C), the driving axle further comprising a transmission (28) that couples one of said second portions (27) to one of the corresponding said shafts (16),
wherein one of said suspension arms (15) comprises a first hollow portion (37) that houses said transmission (28), and
wherein at least a first arm of said suspension arms (15) comprises a second hollow portion (34) that houses, at least partially, a first motor of said motors (18).

2. The driving axle according to claim 1, wherein the rotor portion (20) of said first motor is entirely arranged inside said second hollow portion (34).

3. The driving axle according to claim 1 or 2, wherein said second hollow portion (34, 37) defines an intermediate portion of said first arm, which comprises two ends (44, 45) opposite to one another relative to said intermediate portion and which are suitable for being coupled, respectively, to said frame (2).

4. The driving axle according to claim 3, comprising a pair of elastic connection members (46) respectively connected to said ends (44, 45) and connectable to said frame (2) for coupling said ends (44, 45) to said frame (2).

5. The driving axle according to any one of the preceding claims, further comprising a brake caliper device (50) and an attachment member (51) for attaching a damper device supported by one of said suspension arms (15).

6. A hybrid heavy vehicle (1) comprising:
- a frame (2);
- a pair of wheel-hubs (13); and
- a driving axle (11) according to any one of the preceding claims;
wherein said wheel-hubs (13) are respectively coupled to said shafts (16) and to said second portions (27); said suspension arms (15) and said power take-off (23) being carried by said frame (2).

7. The heavy vehicle according to claim 6, wherein said frame (2) comprises a lower portion (4a) that extends along an additional axis (A), in use directed along the forward direction of said vehicle, and a plurality of appendages (4) protruding from said lower portion according to a direction transverse to said additional axis (A);
each of said suspension arms (15) being coupled to at least one of said appendages (4b) and spaced from said lower portion (4a) along said transverse direction.

8. The heavy vehicle according to claim 6 or 7 comprising an electronic control unit (ECU) electrically coupled to respective said motors (18) for controlling the same said motors (18) in an independent manner.

## Patentansprüche

1. Antriebsachse (11) für ein Schwerlastfahrzeug (1), welche Achse umfasst:
- einen Abtrieb (23), ausgebildet zur Aufnahme von Leistung von einem Verbrennungsmotor des Schwerlastfahrzeugs (1);
- Leistungsverteilungsmittel (24), umfassend zwei Leistungsabtriebe und dazu ausgebildet, die von dem Abtrieb (23) aufgenommene Leistung auf die Leistungsabtriebe zu verteilen;
- zwei Achswellen (25), mit jeweils ersten Abschnitten (26), die mit den Leistungsabtrieben zur Aufnahme von Leistung von den Leistungsverteilungsmitteln (24) gekoppelt sind, und jeweils zweite Abschnitte (27), angeordnet, um mit jeweiligen Radnaben (13) des Schwerlastfahrzeug (1) gekoppelt zu werden und Leistung an die Radnaben (13) weiterzugeben;
**dadurch gekennzeichnet, dass** die Achse ferner umfasst:
- zwei Lagerarme (15), dazu vorgesehen, um mit einem Rahmen (2) des Schwerlastfahrzeugs (1) gekoppelt zu werden;
- zwei Wellen (16), die von dem Lagerarm (15, 15') um eine Achse (10) drehbar gehalten werden und jeweils axiale Enden (17) aufweisen, um jeweils mit den Radnaben (13) verbunden zu werden; und
- zwei elektrische Motoren (18), jeweils umfassend einen Statorteil (19), der an einem der Lagerarme (15) in einer festen Position bezüglich des gleichen der Lagerarme (15) getragen wird, und einen Rotorteil (20), der mit einer der Wellen (16) zum Antrieb der gleichen Welle (16) zur Rotation um die Achse (C) gekoppelt ist;
wobei die zweiten Abschnitte (27) jeweils mit den Wellen (16) zum Antrieb der Wellen (16) zur Drehung um die Achse (C) gekoppelt sind, und die Antriebsachse ferner ein Getriebe (28) umfasst, welches einen der zweiten Abschnitte (27) mit einer der entsprechenden Wellen (16) koppelt,
wobei einer der Lagerarme (15) den ersten hohlen Abschnitt (37) umfasst, der das Getriebe (28) aufnimmt, und wobei zumindest ein erster Arm der Lagerarme (15) einen zweiten hohlen Abschnitt (34) umfasst, der einen ersten Motor der Motoren (18) zumindest teilweise aufnimmt.

2. Antriebsachse gemäß Anspruch 1, bei welcher der Rotorteil (20) des ersten Motors vollständig innerhalb des zweiten hohlen Abschnitts (34) angeordnet ist.

3. Antriebsachse gemäß Anspruch 1 oder 2, bei welcher der zweite hohle Abschnitt (34, 37) einen Zwischenabschnitt des ersten Arms definiert, welcher zwei Enden (44, 45) umfasst, die anderen gegenüberliegend am Zwischenabschnitt angeordnet sind und welche dazu geeignet sind, um jeweils mit dem Rahmen (2) gekoppelt zu werden.

4. Antriebsachse gemäß Anspruch 3, umfassend ein Paar elastischer Verbindungselemente (46), jeweils mit den Enden (44, 45) verbunden sind und mit dem Rahmen (2) zum Koppeln der Enden (44, 45) und dem Rahmen (2) verbindbar sind.

5. Antriebsachse gemäß einem der vorhergehenden Ansprüche, ferner umfassend eine Zangenbremseneinrichtung (50) und ein Montageelement (51) zur Anbringung einer Dämpfungseinrichtung, die von einem der Lagerarme (15) getragen wird.

6. Hybrid-Schwerlastfahrzeug (1), umfassend:
- einen Rahmen (2);
- ein Paar von Radnaben (13); und
- eine Antriebsachse (11) gemäß einem der vorhergehenden Ansprüche;
wobei die Radnaben (13) jeweils an die Wellen (16) und an die zweiten Abschnitte (27) gekoppelt sind, und die Lagerarme (15) und der Abtrieb (23) von dem Rahmen (2) getragen werden.

7. Schwerlastfahrzeug gemäß Anspruch 6, bei welchem der Rahmen (2) einen unteren Teil (4a) umfasst, der sich entlang einer weiteren Achse (A) erstreckt, die sich in Benutzung entlang der Vorwärtsrichtung des Fahrzeugs erstreckt, und eine Mehrzahl von Fortsätzen (4), die sich von dem unteren Teil entlang einer Richtung quer zu der weiteren Achse (A) erstrecken;
wobei jeder der Lagerarme (15) mit zumindest einem der Fortsätze (4b) gekoppelt ist und von dem unteren Teil (4a) entlang der Querrichtung beabstandet ist.

8. Schwerlastfahrzeug gemäß Anspruch 6 oder 7, umfassend eine elektronische Steuereinheit (ECU), die elektrisch mit den jeweiligen Motoren (18) zur Steuerung der Motoren (18) in unabhängiger Weise gekoppelt ist.

## Revendications

1. Essieu moteur (11) pour un véhicule lourd hybride (1), l'essieu comprenant :
- une prise de force (23) configurée pour recevoir une puissance en provenance d'un moteur à combustion interne dudit véhicule lourd (1) ;
- des moyens de distribution de puissance (24) comprenant deux sorties de puissance et configurés pour distribuer la puissance reçue en provenance de ladite prise de force (23) auxdites sorties de puissance ;
- deux arbres de roue motrice (25) ayant de premières parties (26) respectives accouplées auxdites sorties de puissance pour recevoir une puissance en provenance desdits moyens de distribution de puissance (24) et de deuxièmes parties (27) respectives agencées pour être accouplées à des moyeux de roue (13) respectifs dudit véhicule lourd (1) et fournir une puissance auxdits moyeux de roue (13) ;
**caractérisé en ce que** l'essieu comprend en outre :
- deux bras de suspension (15) destinés à être accouplés à un châssis (2) dudit véhicule lourd (1) ;
- deux arbres (16) portés par ledit bras de suspension (15, 15') d'une manière rotative autour d'un axe (C) et ayant des extrémités axiales (17) respectives destinées à être respectivement reliées auxdits moyeux de roue (13) ; et
- deux moteurs électriques (18) ayant chacun une partie stator (19), qui est portée par un bras de suspension parmi lesdits bras de suspension (15) dans une position fixe par rapport à ce même bras de suspension parmi lesdits bras de suspension (15), et une partie rotor (20), qui est accouplée à un arbre parmi lesdits arbres (16) pour entraîner ce même arbre parmi lesdits arbres (16) en rotation autour dudit axe (C) ;
dans lequel lesdites deuxièmes parties (27) sont respectivement accouplées auxdits arbres (16) pour entraîner lesdits arbres (16) en rotation autour dudit axe (C), l'essieu moteur comprenant en outre une transmission (28) qui accouple l'une desdites deuxièmes parties (27) à l'un desdits arbres correspondants (16),
dans lequel l'un desdits bras de suspension (15) comprend une première partie creuse (37) qui loge ladite transmission (28), et
dans lequel au moins un premier bras parmi les bras de suspension (15) comprend une deuxième partie creuse (34) qui loge, au moins en partie, un premier moteur parmi lesdits moteurs (18).

2. Essieu moteur selon la revendication 1, dans lequel la partie rotor (20) dudit premier moteur est entièrement agencée à l'intérieur de ladite deuxième partie creuse (34).

3. Essieu moteur selon la revendication 1 ou 2, dans lequel ladite deuxième partie creuse (34, 37) définit une partie intermédiaire dudit premier bras, qui comprend deux extrémités (44, 45) opposées l'une à l'autre par rapport à ladite partie intermédiaire et qui sont appropriées pour être accouplées, respectivement, audit châssis (2).

4. Essieu moteur selon la revendication 3, comprenant une paire d'éléments de liaison élastiques (46) reliés respectivement auxdites extrémités (44, 45) et pouvant être reliés audit châssis (2) pour accoupler lesdites extrémités (44, 45) audit châssis (2).

5. Essieu moteur selon l'une quelconque des revendications précédentes, comprenant en outre un dispositif étrier de frein (50) et un élément de fixation (51) pour fixer un dispositif amortisseur supporté par l'un desdits bras de suspension (15).

6. Véhicule lourd hybride (1) comprenant
- un châssis (2) ;
- une paire de moyeux de roue (13) ; et
- un essieu moteur (11) selon l'une quelconque des revendications précédentes ;
dans lequel lesdits moyeux de roue (13) sont respectivement accouplés audits arbres (16) et auxdites deuxièmes parties (27) ; lesdits bras de suspension (15) et ladite prise de force (23) étant portés par ledit châssis (2).

7. Véhicule lourd selon la revendication 6, dans lequel ledit châssis (2) comprend une partie inférieure (4a) qui s'étend le long d'un axe supplémentaire (A), dirigée, lors de l'utilisation, le long de la direction de marche avant du véhicule, et une pluralité d'appendices (4) faisant saillie à partir de ladite partie inférieure selon une direction transversale audit axe supplémentaire (A) ;
chacun des bras de suspension (15) étant accouplé à au moins l'un desdits appendices (4b) et espacé de ladite partie inférieure (4a) le long de la direction transversale.

8. Véhicule lourd selon la revendication 6 ou 7 comprenant une unité de commande électronique (ECU) couplée électriquement auxdits moteurs (18) respectifs pour commander ces mêmes moteurs (18) d'une manière indépendante.
